# EUROPÄISCHE PATENTSCHRIFT

(11) **EP 0 603 478 B1**
(45) Veröffentlichungstag und Bekanntmachung des Hinweises auf die Patenterteilung: **17.04.1996**
(21) Anmeldenummer: 93115738.2
(22) Anmeldetag: 29.09.1993
(51) Int. Cl.: H02K 5/22, H02K 3/28

(54) **Verschaltungsplatte zum Verbinden der Drahtenden einer Statorwicklung**
Interconnection board for joining the wire ends of a stator winding
Tableau d'interconnection pour connecter les pointes des fils d'un enroulement de stator

(30) Priorität: 23.12.1992 DE 4243845
(43) Veröffentlichungstag der Anmeldung: 29.06.1994
(73) Patentinhaber: EBM ELEKTROBAU MULFINGEN GmbH & Co., D-74673 Mulfingen (DE)
(72) Erfinder: Erneker, Roland, D-74653 Künzelsau-Amrichshausen (DE); Pollok, Erich, D-97996 Niederstetten (DE)
(74) Vertreter: Patentanwälte Dr. Solf & Zapf

(56) Entgegenhaltungen:
- DE-A- 3 426 973
- DE-B- 2 912 802
- FR-A- 2 402 964

## Beschreibung

Die vorliegende Erfindung betrifft eine Verschaltungs platte zum Verbinden der Drahtenden einer Statorwicklung eines Elektromotors insbesondere eines Elektro-Außenläufermotors mit einer Anschlußleitung, bestehend aus einem aus elektrisch isolierendem Material bestehenden Basisteil mit einer Aufnahmeöffnung für einen Stirnisolationsschaft des Stators sowie mit in taschenförmigen Ausnehmungen des Basisteils angeordneten Steckverbindern zum Anschluß der Anschlußleitung sowie mit einem Aufnahmeabschnitt für einen Temperaturwächter und Anschlußfahnen zum Anschluß der Wicklungsdrähte der Motorwicklungen.

Eine derartige Verschaltungsplatte ist aus der DE-PS 33 35 035 bekannt. Hierbei sind die Aufnahmetaschen für die Steckverbinder derart angeordnet, daß sie einseitig an dem Basisteil ausgebildet sind, wodurch sich die Aufnahmetaschen über den Umfang des Stators hinaus erstrecken, so daß sich ein vorstehender Ansatz ergibt, so daß der zum Einbau des Motors erforderliche Raumbedarf vergrößert wird.Weiterhin ist es erforderlich, die einzelnen Funktionsteile durch eine spezielle Führung der Enden der Wicklungsdrähte miteinander zu verbinden, wodurch sich ein erhöhter Montageaufwand ergibt.

Der vorliegenden Erfindung liegt die Aufgabe zugrunde, eine preiswert auszuführende Verschaltungsplattenanordnung herzustellen, wobei ein möglichst geringer Raumbedarf erforderlich ist und ein hoher Automatisierungsgrad bei der Herstellung erreicht werden kann.

Erfindungsgemäß wird dies dadurch erreicht, daß die taschenförmigen Ausnehmungen paarweise nebeneinanderliegend derart zueinander getrennt am Umfang der Aufnahmeöffnung des Stator-Stirnisolationsschaftes angeordnet sind, daß jedes Paar etwa tangential zur Aufnahmeöffnung verläuft, und der tangentiale Berührungspunkt jeweils auf einer gegenüber einer Mittellinie Y-Y durch die Aufnahmeöffnung um einen Winkel α von ca. 30°bis 60° versetzten Geraden durch den Mittelpunkt der Aufnahmeöffnung in spiegelsymmetrischer Anordnung liegt sowie die elektrische Verbindung der als Steckverbinder ausgebildeten Verbindungselemente mit den Anschlußfahnen über als Blechstanzteile ausgebildete, mit dem Basisteil verbundene Leiterbahnen erfolgt, wobei die taschenförmigen Ausnehmungen und die Leiterbahnen derart angeordnet und dimensioniert sind, daß das Basisteil i.w. innerhalb eines durch den Umfang des Stators definierten Umfangkreises liegt. Somit ergibt sich eine sehr kompakte Verschaltungsplattenanordnung. Durch die Ausbildung sämtlicher elektrischer Verbindungen der einzelnen Funktionsteile untereinander mittels aus Blechstanzteilen bestehender Leiterbahnen und der daran ausgebildeten Anschlußfahnen wird eine weitgehende Vorfertigung ermöglicht, so daß ein hoher Automatisierungsgrad erreicht werden kann. Darüber hinaus ermöglicht die Verwendung von Steckverbindungen, daß der Motor-Lagerhaltungsaufwand aufgrund verschiedener Anschlußkabelausführungen vermieden werden kann.

Vorteilhafte Ausführungen der Erfindung sind in den Unteransprüchen enthalten.

Anhand des in den beiliegenden Zeichnungen dargestellten Ausführungsbeispiels wird die Erfindung näher erläutert.

Es zeigen:
- Fig. 1: eine perspektivische Darstellung einer prinzipiellen Teilansicht eines mit einer erfindungsgemäßen Verschaltungsplattenanordnung versehenen Motors gemäß der Erfindung, wobei eine Explosionsdarstellung gewählt ist,
- Fig. 2: eine Aufsicht auf ein Basisteil einer erfindungsgemäßen Verschaltungsplatte,
- Fig. 3: eine Ansicht gemäß dem Pfeil III in Fig. 2,
- Fig. 4: eine Aufsicht auf eine erfindungsgemäße Verschaltungsplatte,
- Fig. 5: ein Schnitt entlang der Schnittlinie V-V in Fig. 4,
- Fig. 6: eine Ansicht gemäß dem Pfeil VI in Fig. 4, jedoch mit zugehörigem Deckel,
- Fig. 7: eine Aufsicht auf eine erfindungsgemäße Verschaltungsplatte im am Stator befestigten Zustand,
- Fig. 8: eine Aufsicht gemäß Fig. 7, jedoch mit abgedecktem Wickeldrahtanschlußbereich.

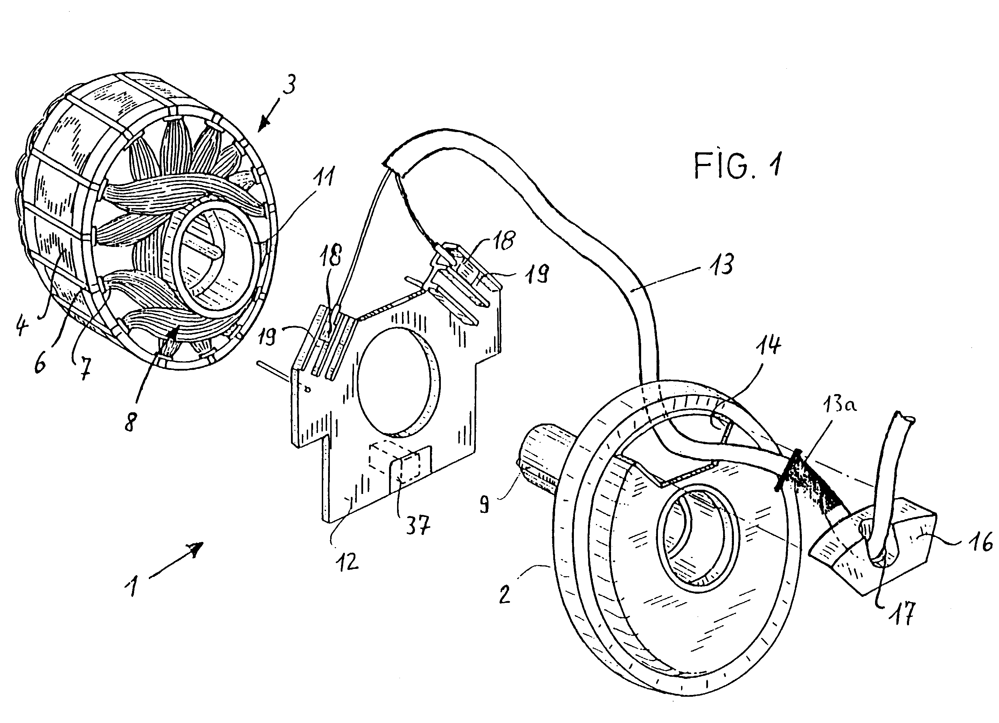

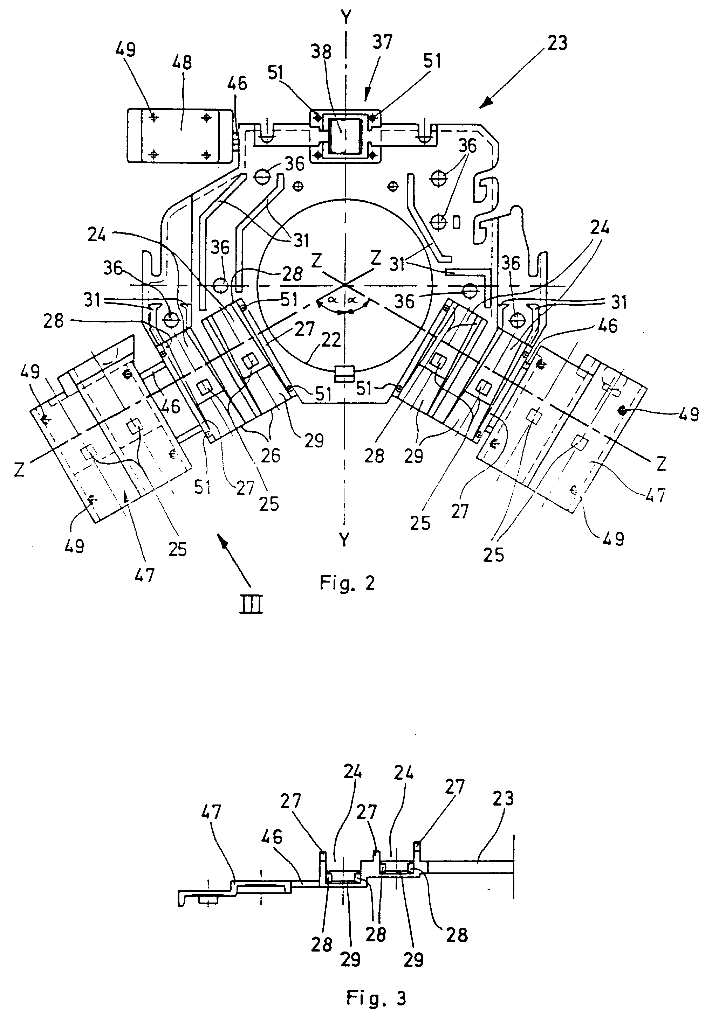

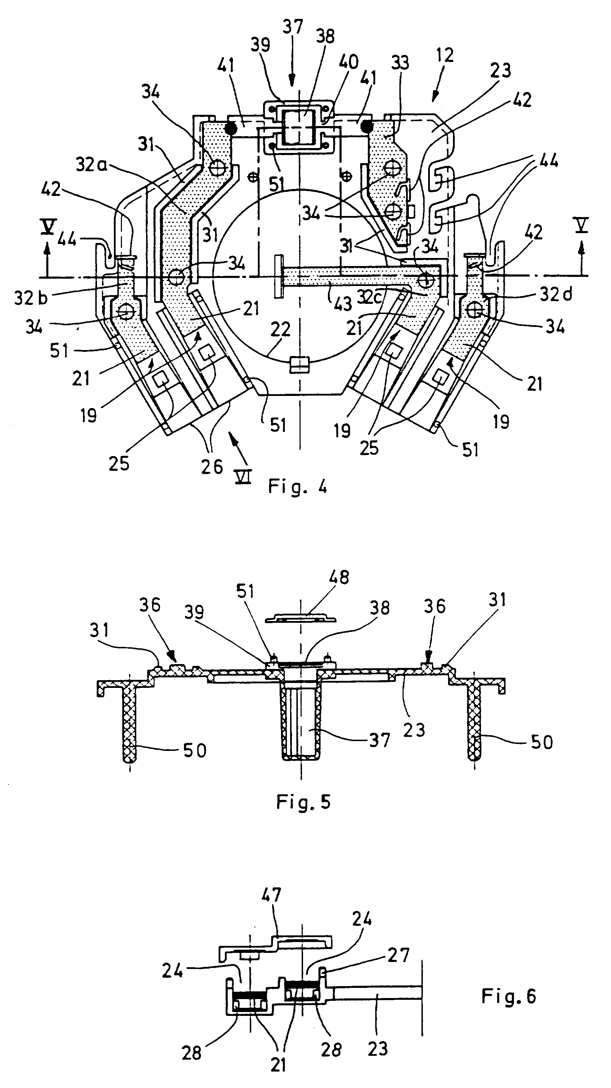

Wie sich aus Fig. 1 ergibt, besteht ein erfindungsgemäßer Außenläufermotor 1 aus einem an einem scheiben- oder kappenförmigen Motorflansch 2 montierbaren Stator 3 mit einem Statorblechpaket 4 und in Nuten 6 des Blechpaketes 4 angeordneten Statorwicklungen 7. Diese Statorwicklungen 7 bilden auf den Stirnseiten des Stators 3 jeweils einen Wickelkopf 8. Weiterhin weist der erfindungsgemäße Motor 1 einen den Stator 6 glockenförmig umschließenden, nicht dargestellten, als Außenläufer ausgebildeten Rotor auf. Der Motorflansch 2 ist einstückig mit einem Lagertragrohr 9 verbunden, wobei der Motorflansch 2 und das Lagertragrohr 9 vorzugsweise aus Aluminium-Druckguß hergestellt sind. Das Lagertragrohr 9 dient zur Aufnahme der nicht dargestellten, zur Lagerung einer Läuferwelle dienenden Lagerelemente.
Beidseitig des Stators 3 ist jeweils ein rohrförmiger Stirnisolationsschaft 11 aufgesetzt, durch den das Lagertragrohr 9 des Motorflansches 2 axial einschiebbar und innerhalb des Statorblechpaketes form- und kraftschlüssig fixiert ist. Zwischen dem Stator 3 und dem Motorflansch 2 ist auf dem Stirnisolationsschaft 11 eine Verschaltungsplatte 12 angeordnet. Diese Verschaltungsplatte 12 dient zum Verschalten der Enden der Statorwicklungen 7 und zum Verbinden dieser Enden mit den Enden einer Motoranschlußleitung 13. Weiterhin dient die Verschaltungsplatte 12 als abdeckende Isolierscheibe für den Wickelkopf 8. Wie weiterhin aus Fig. 1 zu erkennen ist, weist der Motorflansch 2 eine kreissegmentförmige Öffnung 14 auf, in die ein aus Kunststoff bestehender Verschlußdeckel 16 einsetzbar ist, in dem eine Öffnung 17 zum Durchführen der Motoranschlußleitung 13 ausgebildet ist. Der Verschlußdeckel 16 kann in die Öffnung 14 rastend eingeklipst werden, wobei eine auf der Innenseite des Verschlußdeckels 16 anliegende Kabeltülle 13a als Knickschutztülle für die Motoranschlußleitung 13 dient und auch die Funktion einer Zugentlastung übernehmen kann. In Fig. 1 ist die Verschaltungsplatte 12 lediglich vom Prinzip her dargestellt, wobei zu erkennen ist, daß die Anschlußleitung 13 über Anschlußbuchsen 18 mit in Fig. 4 dargestellten Verbindungselementen 19 verbunden ist. Die Verbindungselemente 19 weisen endseitig Flachsteckerabschnitte 21 auf, und sind im übrigen als Blechstanzteil hergestellt. Die konkrete erfindungsgemäße Ausgestaltung der Verschaltungsplatte 12 und der Verbindungselemente 19 ist in den nachfolgenden Figuren 2 bis 7 im einzelnen dargestellt und wird nachfolgend nunmehr erläutert.

Die Verschaltungsplatte 12 besitzt eine Aufnahmeöffnung 22 zum Aufstecken auf den Stirnisolationsschaft 11 des Stators. Hierbei ist in Fig. 2 nicht die fertige erfindungsgemäße Verschaltungsplatte dargestellt, vielmehr ein Basisteil 23, aus dem die erfindungsgemäße Verschaltungsplatte hergestellt wird. An diesem Basisteil 23 sind um die Aufnahmeöffnung 22 herum die einzelnen Funktionsbereiche der Verschaltungsplatte ausgebildet.

Der Funktionsbereich zur Aufnahme der Verbindungselemente 19 besteht aus taschenförmigen, im Querschnitt rechteckigen Ausnehmungen 24, die etwa tangential zur Aufnahmeöffnung 22 verlaufen, wobei die gedachten Berührungspunkte der Tangenten an der Aufnahmeöffnung jeweils auf einer Geraden liegen, die ca. 30° bis 60°, vorzugsweise ca. 45° versetzt zur Mittellinie Y-Y in Fig. 2 verläuft. Diese 45°-Linie ist jeweils mit Z-Z gekennzeichnet. Im dargestellten Ausführungsbeispiel sind beidseitig der Mittellinie Y-Y jeweils zwei parallele taschenförmige Ausnehmungen 24 i.w. klappsymmetrisch zueinander ausgebildet. Wie aus der Fig. 3 zu erkennen ist, sind die nebeneinanderliegenden taschenförmigen Ausnehmungen 24 jeweils gegeneinander in der Höhe versetzt, wobei die beiden außenliegenden taschenförmigen Ausnehmungen 24 tiefer liegen als die innenliegenden taschenförmigen Ausnehmungen 24. Die taschenförmigen Ausnehmungen 24 sind nach oben und zu ihrer vorderen Stirnseite 26 hin offen. An ihren Längswänden 27 besitzen die taschenförmigen Ausnehmungen 24 innere Randstege 28, deren Höhe geringer ist als die Höhe der Längswände 27. Diese Randstege 28 dienen als Auflage für die Flachsteckerabschnitte 21 in Fig. 4 der Verbindungselemente 19. Hierdurch wird ein Abstand zum Boden 29 der taschenförmigen Ausnehmungen 24 gewährleistet, so daß die Anschlußbuchsen 18 der Motoranschlußleitung 13 behinderungsfrei aufgesteckt werden können. Die Anschlußbuchsen 18 der Motoranschlußleitung 13 weisen vorzugsweise zur Gewährleistung einer unlösbaren, bzw. nur mit speziellen Werkzeugen lösbaren Anschlußverbindung an ihrer Ober- und Unterseite Rasthaken auf, die in eingestecktem Zustand der Anschlußbuchsen 18 sowohl in Vertiefungen 25 am Boden 29 der Ausnehmungen 24 als auch am zugehörigen Deckelteil 47 eingreifen.

Etwa parallel verlaufend zur Mittellinie Y-Y schließt sich an die taschenförmigen Ausnehmungen 24 ein weiterer Funktionsbereich an, und zwar der Kontaktierungsbereich zum Anschluß der Motorwicklungen und eines Temperaturwächters. Hierzu sind in Verlängerung der taschenförmigen Ausnehmungen 24 und zwar der vorderen Stirnseite 26 gegenüberliegend durch Trennstege 31 abgegrenzte Kontaktierungsbereiche ausgebildet. Wie sich insbesondere aus Fig. 4 ergibt, befinden sich in diesen Kontaktierungsbereichen Leiterbahnen 32 und 33. Die Leiterbahnen 32 sind einstückig mit den Flachstekkerabschnitten 21 ausgebildet und bilden die Verbindungselemente 19. Die Leiterbahn 33 stellt ein getrenntes Verbindungselement dar. Zur Befestigung der Leiterbahnen 32, 33 sind in diesen Bohrungen 34 vorgesehen, die von kreisförmig ausgebildeten Erhebungen 36 auf dem Basisteil 23 durchgriffen werden. Durch Wärmeeinwirkung, beispielsweise durch Ultraschall-Verschweißung unter Aufbringen eines Pressdrucks werden die Leiterbahnen 32, 33 mittels der Erhebungen 36 auf dem Basisteil 23 fixiert. Wie weiterhin aus Fig. 2 zu erkennen ist, befindet sich im Winkelbereich zwischen den taschenförmigen Ausnehmungen 24 in Richtung auf die vorderen Stirnseiten 26 ein Freiraum im Umfangsbereich des Basisteils 23. In diesen Freiraum enden die Leitungen der Anschlußleitung 13. Dem Freiraum gegenüberliegend ist am Basisteil 23 ein hohlzylindrischer Ansatz 37 angeformt, der vorzugsweise im Querschnitt rechteckförmig ist - siehe Fig. 5 - in den ein Temperaturwächter eingeschoben werden kann. Der hohlzylindrische Ansatz 37 erstreckt sich in axialer Richtung des Lagertragrohres 9 und ist auf den Stator 3 hin gerichtet. Auf der Oberseite des Basisteils 23 ist die Einstecköffnung 38 des hohlzylindrischen Ansatzes 37 mit einem Randsteg 39 versehen. An den gegenüberliegen Schmalseiten des Randsteges 39 sind Durchbrüche 40 ausgebildet, durch die Leiterbahnen 41 geführt sind. Diese Leiterbahnen 41 sind wiederum als Blechstanzteile ausgebildet und dienen zur Kontaktierung eines in dem hohlzylindrischen Ansatz 37 eingesetzten Temperaturwächters. Wie sich aus Fig. 4 ergibt, besitzen die einzelnen Leiterbahnen 32, 33, 41 unterschiedliche Formen und einen unterschiedlichen Verlauf. Im dargestellten Ausführungsbeispiel ist eine Leiterbahn 32a vorhanden, die einen Flachsteckerabschnitt 21 mit der Leiterbahn 41 zum Anschluß des Temperaturwächters verbindet. Weiterhin ist eine Leiterbahn 32b ausgebildet, die einen Flachsteckerabschnitt 21 mit einer Anschlußfahne 42 zum Anschluß einer Motorwicklung verbindet. Auf der gegenüberliegenden Seite zu den Leiterbahnen 32a, 32b des Basisteils 23 ist innenliegend eine Leiterbahn 32c vorhanden, die einen Flachsteckerabschnitt 21 mit einem Schutzleiteranschlußteil 43 verbindet. Ein weiterer nach außen versetzter Flachsteckerabschnitt 21 ist mit einer Leiterbahn 32d verbunden, die wiederum eine Verbindung zu einer Anschlußfahne 42 herstellt zum Anschluß einer Motorwicklung. Die Leiterbahn 33 dient zum Verbinden der Leiterbahn 41 zum Anschluß des Temperaturwächters mit Anschlußfahnen 42 zum Anschluß der Motorwicklungen. Im Bereich der Anschlußfahnen 42 sind in dem Basisteil 23 randoffene Schlitze 44 ausgebildet, durch die die Enden der Anschlußdrähte der Motorwicklungen geführt werden. Die Leiterbahnen 32a, 33 überlappen die Enden der Enden der Leiterbahnen 41.

Wie weiterhin der Fig. 2 zu entnehmen ist, sind seitlich am als Spritzgußteil ausgebildeten Basisteil 23, und zwar einerseits im Bereich der taschenförmigen Ausnehmungen 24 sowie andererseits im Bereich des hohlzylindrischen Ansatzes 37 über Sollbruchstellen 46 Deckelteile 47, 48 mitangespritzt. Anstatt von Sollbruchstellen können auch Schanierverbindungen vorgesehen sein. Diese Deckelteile 47, 48 können nach dem Abtrennen im Bereich der Sollbruchstelle 46 auf die taschenförmigen Ausnehmungen 24 bzw. den hohlzylindrischen Ansatz 37 im Bereich ihrer Oberseite aufgesteckt werden, wozu in den Deckelecken jeweils Löcher 49 vorhanden sind, in die Steckerzapfen 51 im Bereich der Längswände 27 der taschenförmigen Ausnehmungen 24 bzw. der die Einstecköffnung 38 des hohlzylindrischen Ansatzes 37 umgebenden Randstege 39 hineingeschoben werden. Nach dem Aufstecken werden die Deckelteile 47, 48 verschweißt. Die derart abgedeckten Bereiche bilden den Anschlußbereich für die Anschlußbuchsen 18 sowie den Temperaturwächter und die nichtabgedeckten freiliegenden Leiterbahnen dienen einerseits dem Anschluß der Motorwicklungsdrähte und andererseits als Verbindungselement zum Temperaturwächter sowie zur Verbindung von Statorblechteilen mit dem Schutzleiteranschlußteil 43. Wie aus Fig. 4 ersichtlich ist, besteht das Schutzleiteranschlußteil 43 aus einer als Blechstanzteil ausgebildeten Leiterbahn, die radial in die Aufnahmeöffnung 22 hineinragt, und zwar vorzugsweise über die Mitte der Öffnung 22 hinaus. Am freien Ende befindet sich eine Verbreiterung der Leiterbahn.

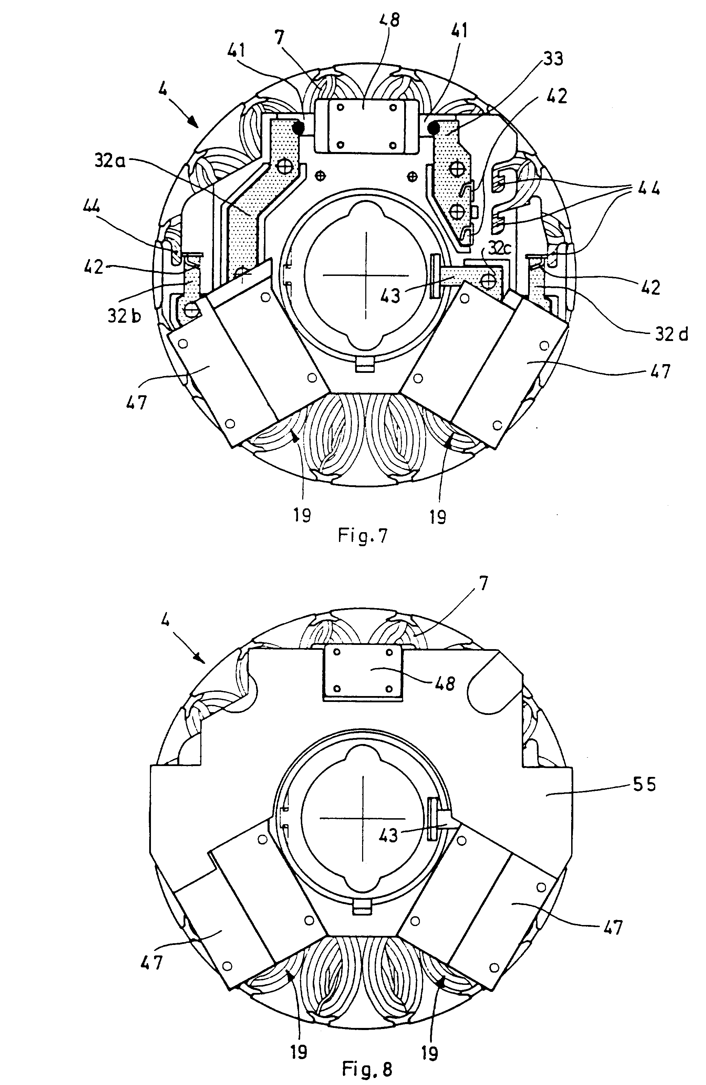

Die komplettierte Verschaltungsplatte, bestehend aus Basisteil 23, den befestigten Verbindungselementen 19 mit den Leiterbahnen 32, 33, 41, 43 sowie mit eingestecktem Temperaturwächter in dem hohlzylindrischen Ansatz 37 und befestigten Deckelteilen 47, 48 ist in Fig. 7 dargestellt und wird nun von Hand auf den Stirnisolationsschaft 11 des Stators 3 aufgesetzt, wobei die Wicklungsdrahtenden durch die als Drahteinläufe dienenden Schlitze 44 an die Leiterbahnen 32b, 32d und 33 herangeführt und an den zugeordneten Anschlußfahnen 42 befestigt werden. Die Anschlußfahnen 42 ragen in axialer Richtung von der Verschaltungsplatte 12 weg. Die an den Anschlußfahnen 42 manuell herangeführten Wicklungsdrahtenden werden nunmehr in einer speziellen Vorrichtung mit den Anschlußfahnen 42 verlötet bzw. verschweißt. Danach werden die Anschlußfahnen 42 in die Ebene der Leiterbahnen umgelegt bzw. zurückgebogen und zwar in Richtung auf die als Drahteinläufe dienenden Schlitze 44. Hierdurch wird erfindungsgemäß erreicht, daß die während der Verbindungsphase festgespannten Anschlußenden der Wickeldrähte wieder entlastet werden. Weiterhin wird gleichzeitig der radial in die Aufnahmeöffnung 42 ragende Schutzleiteranschlußteil 43 axialer Richtung umgebogen, so daß der Schutzleiteranschlußteil 43 in den Innenraum des Stators hineingebogen wird und nach Einpressen des Lagertragrohres 9 mit seinem breiteren Endteil an dem Statorblechpaket 4 anliegt. Weiterhin wird, wie in Fig. 8 erfindungsgemäß dargestellt, ein separates Abdeckteil 55 zur Abdeckung der Wickeldrahtanschlußbereiche als Berührungsschutz an dem Basisteil 23 befestigt. Außerdem kann es zweckmäßig sein, wenn das Basisteil 23 an seiner dem Stator 3 zugekehrten Unterseite Distanzstifte 50 besitzt, die zur Lagefixierung und mechanischen Abstützung der Verschaltungsplatte 12 auf dem Stator 3 dienen.

Durch die erfindungsgemäße Anordnung und Dimensionierung der einzelnen Funktionselemente liegt die Verschaltungsplatte 12 i.w. innerhalb des vom Statorumfang bestimmten Umfangskreises.

## Patentansprüche

1. Verschaltungsplatte zum Verbinden der Drahtenden einer Statorwicklung (7) eines Elektormotors insbesondere eines Elektro-Außenläufermotors (1) mit einer Anschlußleitung (13), bestehend aus einem aus elektrisch isolierenden Material bestehenden Basisteil (23) mit einer Aufnahmeöffnung (22) für einen Stirnisolationsschaft (11) des Stators (3) sowie mit in taschenförmigen Ausnehmungen (24) des Basisteils (23) angeordneten Steckverbindern zum Anschluß der Anschlußleitung (13) sowie mit einem Aufnahmeabschnitt für einen Temperaturwächter und Anschlußfahnen (42) zum Anschluß der Wicklungsdrähte der Motorwicklungen,
**dadurch gekennzeichnet**, daß die taschenförmigen Ausnehmungen (24) paarweise nebeneinanderliegend derart zueinander getrennt am Umfang der Aufnahmeöffnung (22) des Stator-Stirnisolationsschaftes (11) angeordnet sind, daß jedes Paar etwa tangential zur Aufnahmeöffnung (22) verläuft, und der tangentiale Berührungspunkt jeweils auf einer gegenüber einer Mittellinie Y-Y durch die Aufnahmeöffnung (22) um einen Winkel α von ca. 30° bis 60° versetzten Geraden durch den Mittelpunkt der Aufnahmeöffnung in spiegelsymmetrischer Anordnung liegt sowie die elektrische Verbindung der als Steckverbinder ausgebildeten Verbindungselemente (19) mit den Anschlußfahnen (42) über als Blechstanzteile ausgebildete, mit dem Basisteil (23) verbundene Leiterbahnen (32,33,41) erfolgt, wobei die taschenförmigen Ausnehmungen (24) und die Leiterbahnen (32, 33, 41) derart angeordnet und dimensioniert sind, daß das Basisteil (23) im wesentlichen innerhalb eines durch den Umfang des Stators (3) definierten Umfangskreises liegt.

2. Verschaltungsplatte nach Anspruch 1,
**dadurch gekennzeichnet,** daß die nebeneinanderliegenden taschenförmigen Ausnehmungen (24) jeweils gegeneinander in der Höhe versetzt sind, wobei die jeweils außenliegende taschenförmige Ausnehmung (24) tiefer liegt als die jeweils innenliegende taschenförmige Ausnehmung (24).

3. Verschaltungsplatte nach Anspruch 1 oder 2,
**dadurch gekennzeichnet,** daß die taschenförmigen Ausnehmungen (24) an ihren Längswänden (27) Randstege (28) besitzen, deren Höhe geringer ist als die Höhe der Seitenwände (27), wobei die Randstege (28) als Auflage für Flachsteckerabschnitte (21) der Verbindungselemente (19) dienen.

4. Verschaltungsplatte nach einem der Ansprüche 1 bis 3, **dadurch gekennzeichnet**, daß in Verlängerung der taschenförmigen Ausnehmungen (24), und zwar der vorderen Stirnseite (26) gegenüberliegend, durch Trennstege (31) abgegrenzte Kontaktierungsbereiche ausgebildet sind, in denen Leiterbahnen (32) und (33) angeordnet sind.

5. Verschaltungsplatte nach einem der Ansprüche 1 bis 4, **dadurch gekennzeichnet** , daß die Leiterbahnen (32) einstückig mit den Flachsteckerabschnitten (21) der Verbindungselemente (19) ausgebildet sind und die Verbindungselemente (19) und die Leiterbahnen (33) jeweils getrennte Verbindungselemente darstellen.

6. Verschaltungsplatte nach einem der Ansprüche 1 bis 5, **dadurch gekennzeichnet** , daß die Leiterbahnen (32), (33) Bohrungen (34) aufweisen, die von kreisförmig ausgebildeten Erhebungen (36) auf dem Basisteil (23) durchgriffen werden und vorzugsweise durch Wärmeeinwirkung, insbesondere durch Ultraschall-Verschweißung unter Aufbringung eines Pressdrucks die Leiterbahnen (32), (33) fixiert werden.

7. Verschaltungsplatte nach einem der Ansprüche 1 bis 6, dadurch gekennzeichnet , daß sich im Winkelbereich zwischen den taschenförmigen Ausnehmungen (24) in Richtung auf die vorderen Stirnseiten (26) ein Freiraum im Umfangsbereich des Basisteils (23) befindet, in dem die Leitungen der Anschlußleitung (13) enden.

8. Verschaltungsplatte nach einem der Ansprüche 1 bis 7, **dadurch gekennzeichnet** , daß dem Freiraum gegenüberliegend am Basisteil (23) ein hohlzylindrischer Ansatz (37) angeformt ist, der vorzugsweise im Querschnitt rechteckig ist und zur Aufnahme eines Temperaturwächters dient, wobei der hohlzylindrische Ansatz (37) sich in axialer Richtung des Lagertragrohrs (9) erstreckt und auf den Stator (3) hin gerichtet ist.

9. Verschaltungsplatte nach einem der Ansprüche 1 bis 8, **dadurch gekennzeichnet**, daß auf der Oberseite des Basisteils (23) um die Einstecköffnung (38) des hohlzylindrischen Ansatzes (37) ein Randsteg (39) ausgebildet ist und an den gegenüberliegenden Schmalseiten des Randsteges (39) Durchbrüche (40) vorhanden sind, durch die als Blechstanzteile ausgebildete Leiterbahnen (41) geführt sind, die zur Kontaktierung eines in dem hohlzylindrischen Ansatz (37) eingesetzten Temperaturwächters dienen.

10. Verschaltungsplatte nach einem der Ansprüche 1 bis 9, **dadurch gekennzeichnet**, daß seitlich am Basisteil (23) und zwar einerseits im Bereich der taschenförmigen Ausnehmungen (24) sowie andererseits im Bereich des hohlzylindrischen Ansatzes (37) über Sollbruchstellen (46) Deckelteile (47, 48) mitangespritzt sind, die nach dem Abtrennen im Bereich der Sollbruchstellen (46) auf die taschenförmigen Ausnehmungen (24) bzw. den hohlzylindrischen Ansatz (37) im Bereich ihrer Oberseite aufgesteckt werden, wozu in den Deckelecken jeweils Löcher (49) vorhanden sind, in die Steckerzapfen (51) im Bereich der Längswände (27) bzw. des Randsteges (39) hineingeschoben werden.

11. Verschaltungsplatte nach einem der Ansprüche 1 bis 10, **dadurch gekennzeichnet**, daß ein Schutzleiteranschlußteil (43) aus einer als Blechstanzteil ausgebildeten Leiterbahn radial in die Aufnahmeöffnung (22) hineinragt und mit einem Verbindungselement (19) verbunden ist.

12. Verschaltungsplatte nach einem der Ansprüche 1 bis 11, **dadurch gekennzeichnet** , daß im Bereich des Freiraums zwischen den spiegelsymmetrisch angeordneten taschenförmigen Ausnehmungen (24) der Motorflansch (2) eine kreissegmentförmige Öffnung (14) aufweist in die ein aus Kunststoff bestehender Verschlußdeckel (16) einsetzbar ist, in dem eine Öffnung (17) zum Durchführen der Motoranschlußleitung (13) ausgebildet ist, wobei der Verschlußdeckel (16) in die Öffnung (14) rastend einklipsbar ist.

## Claims

1. An interconnection board for connecting the wire ends of a stator winding (7) of an electric motor, in particular an external-rotor electric motor (1) having a connecting lead (13), the interconnection board comprising a base part (23) of electrically insulating material, said base part (23) having a receiving opening (22) for an end-face insulation shaft (11) of the stator (3), and having plug connectors arranged in pocket-like recesses (24) in the base part (23), for connecting the connecting lead (13), and having a receiving section for a temperature monitor and connecting lugs (42) for connecting the winding wires of the motor windings, characterized in that the pocket-like recesses (24) are arranged on the periphery of the receiving opening (22) of the stator end-face insulation shaft (11), lying next to one another in pairs and separated from one another in such a manner that each pair runs approximately tangentially with respect to the receiving opening (22), and the tangential point of contact in each case lies, in a mirror-symmetrical arrangement, on a straight line through the centre point of the receiving opening, in relation to a centre line Y-Y through the receiving opening (22) offset by an angle a of approximately 30° to 60°, and the electrical connection to the connecting lugs (42) of the connection elements (19) which are constructed as plug connectors is made by way of conductor tracks (32, 33, 41) which are constructed as punched metal parts and are connected to the base part (23), the pocket-like recesses (24) and the conductor tracks (32, 33, 41) being arranged and dimensioned such that the base part (23) lies substantially within a peripheral circle defined by the periphery of the stator (3).

2. An interconnection board according to Claim 1, characterized in that the mutually adjacent pocket-like recesses (24) are each offset from one another vertically, the respectively external pocket-like recess (24) being lower down than the respectively internal pocket-like recess (24).

3. An interconnection board according to Claim 1 or 2, characterized in that the pocket-like recesses (24) have, on their longitudinal walls (27), marginal webs (28) whereof the height is less than the height of the side walls (27), the marginal webs (28) serving as a support for flat connector sections (21) of the connection elements (19).

4. An interconnection board according to one of Claims 1 to 3, characterized in that, as an extension to the pocket-like recesses (24), opposite the front end face (26), there are constructed contacting regions which are delimited by separating webs (31) and in which conductor tracks (32) and (33) are arranged.

5. An interconnection board according to one of Claims 1 to 4, characterized in that the conductor tracks (32) are constructed in one piece with the flat connector sections (21) of the connection elements (19), and the connection elements (19) and the conductor tracks (33) are in each case separate connection elements.

6. An interconnection board according to one of Claims 1 to 5, characterized in that the conductor tracks (32), (33) have bores (34) through which circular elevations (36) on the base part (23) reach, and the conductor tracks (32), (33) are preferably fixed by the action of heat, in particular by ultrasound welding with the application of a contact pressure.

7. An interconnection board according to one of Claims 1 to 6, characterized in that in the angle region between the pocket-like recesses (24), in the direction of the front end faces (26), there is a free space in the peripheral region of'the base part (23) in which the leads of the connecting lead (13) terminate.

8. An interconnection board according to one of Claims 1 to 7, characterized in that a hollow-cylindrical projection (37) is integrally formed on the base part (23) opposite the free space, and this hollow-cylindrical projection (37) is preferably rectangular in cross-section and serves to receive a temperature monitor, the hollow-cylindrical projection (37) extending in the axial direction of the bearing-supporting tube (9) and being directed towards the stator (3).

9. An interconnection board according to one of Claims 1 to 8, characterized in that a marginal web (39) is constructed on the upper side of the base part (23), around the insertion opening (38) of the hollow-cylindrical projection (37), and there are on the opposite narrow sides of the marginal web (39) apertures (40) through which conductor tracks (41) constructed as punched metal parts are guided, said conductor tracks (41) serving for the contacting of a temperature monitor inserted in the hollow-cylindrical projection (37).

10. An interconnection board according to one of Claims 1 to 9, characterized in that cover parts (47, 48) are injection-moulded at the same time laterally onto the base part (23), on the one hand in the region of the pocket-like recesses (24) and on the other hand in the region of the hollow-cylindrical projection (37), by way of predetermined rupture joints (46), these cover parts (47, 48), after severing in the region of the predetermined rupture joints (46), being pushed onto the pocket-like recesses (24) and the hollow-cylindrical projection (37) respectively in the region of their upper side, for which purpose there are provided in the corners of each of the covers holes (49) into which plug-type pegs (51) are pushed in the region of the longitudinal walls (27) and of the marginal web (39) respectively.

11. An interconnection board according to one of Claims 1 to 10, characterized in that a protective-conductor connecting part (43) projects out of a conductor track, constructed as a punched metal part, radially into the receiving opening (22) and is connected to a connection element (19).

12. An interconnection board according to one of Claims 1 to 11, characterized in that, in the region of the free space between the pocket-like recesses (24) arranged in mirror symmetry, the motor flange (2) has an opening (14) in the shape of a circle segment, into which a closing cover (16) of plastics material may be inserted, in which there is made an opening (17) for guiding through the motor connecting lead (13), the closing cover (16) being capable of being clipped in latching manner into the opening (14).

## Revendications

1. Plaque d'interconnexion pour connecter les extrémités de fils d'un enroulement de stator (7) d'un moteur électrique, en particulier d'un moteur électrique à induit extérieur (1) à une ligne de connexion (13), cette plaque comprenant un élément de base (23) en une matière électriquement isolante muni d'une ouverture (22) d'introduction d'un manchon d'isolation frontal (11) du stator (3), des connecteurs par enfichage disposés dans des évidements en forme de poches (24) de l'élément de base (23) en vue de connecter la ligne (13), une section de réception d'un moyen de surveillance de la température, et des barrettes de connexion (42) pour connecter les fils de l'enroulement du moteur,
caractérisée en ce que les évidements en forme de poches (24) sont juxtaposés par paires sur la périphérie de l'ouverture (22) d'introduction du manchon d'isolation frontal (11) du stator et séparés entre eux de manière à ce que chaque paire s'étende sensiblement tangentiellement à l'ouverture (22), leur point de contact tangentiel respectif étant situé de manière symétrique par rapport à une ligne centrale Y-Y traversant l'ouverture, sur une droite passant par le centre de l'ouverture et faisant un angle α de 30° à 60° environ par rapport à ladite ligne centrale, la connexion électrique par enfichage des éléments de connexion (19) en forme de connecteur avec les barrettes de connexion (42) étant effectuée par des pistes conductrices (32, 33, 41) ayant la forme d'éléments en tôle découpée et fixées à l'élément de base (23), la disposition et les dimensions des évidements en forme de poches (24) étant telles que l'élément de base (23) soit sensiblement situé à l'intérieur d'un cercle dont le périmètre est défini par la périphérie du stator (3).

2. Plaque d'interconnexion selon la revendication 1,
caractérisée en ce que les évidements en forme de poches (24) juxtaposés sont décalés en hauteur les uns par rapport aux autres, l'évidement en forme de poche (24) respectivement disposé à l'extérieur étant situé à une plus faible hauteur que l'évidement en forme de poche (24) respectivement disposé à l'intérieur.

3. Plaque d'interconnexion selon la revendication 1 ou 2, caractérisée en ce que les évidements en forme de poches (24) présentent sur leurs parois longitudinales (27) des nervures de bord (28) dont la hauteur est inférieure à la hauteur des parois longitudinales (27), les nervures de bord (28) servant d'appui à des portions de fiche plate (21) des éléments de connexion (19).

4. Plaque d'interconnexion selon l'une des revendications 1 à 3,
caractérisée en ce que, dans le prolongement des évidements en forme de poches (24), à savoir en regard de la face antérieure (26), sont formées des régions de contact délimitées par des nervures de séparation (31) dans lesquelles sont agencées des pistes conductrices (32, 33).

5. Plaque d'interconnexion selon l'une des revendications 1 à 4,
caractérisée en ce que les pistes conductrices (32) sont formées d'une pièce avec les portions de fiche plate (21) des éléments de connexion (19), et que les éléments de connexion (19) et les pistes conductrices (33) constituent respectivement des éléments de connexion séparés.

6. Plaque d'interconnexion selon l'une des revendications 1 à 5,
caractérisée en ce que les pistes conductrices (32, 33) présentent des alésages (34) traversés par des renflements circulaires (36) de l'élément de base (23), et que les pistes conductrices (32, 33) sont fixées de préférence par effet thermique, en particulier par soudure à ultrasons en appliquant une force de pression.

7. Plaque d'interconnexion selon l'une des revendications 1 à 6,
caractérisée en ce que, dans la région angulaire entre les évidements en forme de poches (24), dans la direction des faces antérieures (26), est situé un espace libre dans la région périphérique de l'élément de base (23) où débouchent les fils de la ligne de connexion (13).

8. Plaque d'interconnexion selon l'une des revendications 1 à 7,
caractérisée en ce que, en regard de l'espace libre, un appendice cylindrique creux (37) est formé sur l'élément de base (23), cet appendice ayant de préférence une section transversale rectangulaire et servant à loger un moyen de surveilllance de la température, l'appendice cylindrique creux (37) s'étendant dans la direction axiale du tube de support palier (9) et étant orienté vers la stator (3).

9. Plaque d'interconnexion selon l'une des revendications 1 à 8,
caractérisée en ce que, sur la face supérieure de l'élément de base (23), autour de l'ouverture (38) de l'appendice cylindrique creux (37), une nervure de bord (39) est formée et que, sur les petits côtés en regard de la nervure de bord (39), sont prévus des percements (40) à travers lesquels passent des pistes conductrices (41) en forme d'éléments en tôle découpée qui servent à établir le contact avec un moyen de surveillance de la température inséré dans l'appendice cylindrique creux (37).

10. Plaque d'interconnexion selon l'une des revendications 1 à 9,
caractérisée en ce que, latéralement sur l'élément de base (23), d'une part dans la région des évidements en forme de poches (24) et, d'autre part, dans la région de l'appendice cylindrique creux (37), des éléments de capot (47, 48) sont venus de moulage par des points destinés à la rupture (46) et sont emboîtés, après séparation à l'endroit des points destinés à la rupture (46), sur les évidements en forme de poches (24), respectivement sur l'appendice cylindrique creux (37) dans la région de leurs faces supérieures, des trous (49) étant à cet effet prévus dans les extrémités du capot, dans lesquels on glisse des tiges d'enfichage (51) prévues dans la région des parois longitudinales (27) ou des nervures de bord (39).

11. Plaque d'interconnexion selon l'une des revendications 1 à 10,
caractérisée en ce que, depuis une piste conductrice en forme d'élément en tôle découpée, une portion de connexion d'une ligne de protection (43) fait radialement saillie dans l'ouverture (22) et est reliée à un élément de connexion (19).

12. Plaque d'interconnexion selon l'une des revendictions 1 à 11,
caractérisée en ce que, dans la région de l'espace libre entre les évidements en forme de poches (24) symétriques par rapport à un plan, la bride (2) du moteur présente une ouverture (14) en forme de segment de cercle dans laquelle on peut insérer un capot de fermeture (16) en une matière synthétique dans lequel est formée une ouverture (17) de passage de la ligne de connexion (13) du moteur, le capot de fermeture (16) pouvant être verrouillé de manière encliquetable dans l'ouverture (14).
